# EUROPEAN PATENT APPLICATION

(11) **EP 2 187 266 A1**
(43) Date of publication of application: **19.05.2010**
(21) Application number: 09175506.6
(22) Date of filing: 10.11.2009
(51) Int. Cl.: G03G 9/09

(54) **Toners including carbon nanotubes dispersed in a polymer matrix**

(30) Priority: 17.11.2008 US 272412
(71) Applicant: Xerox Corporation, Rochester, New York 14644 (US)
(72) Inventor: Farrugia, Valerie M, Oakville, Ontario L6H 7V8 (CA); Qi, Yu, Oakville Ontario L6H 7L3 (CA); Gerroir, Paul J., Oakville Ontario L6L 1P9 (CA); Duque, Rosa M., Brampton Ontario L6Y 5L1 (CA); Asfaw, Biritawit, Oakville Ontario L6H3Y9 (CA); Hawkins, Michael S., Cambridge Ontario N1S 3L5 (CA)
(74) Representative: Gervasi, Gemma

(57) **Abstract**

A toner comprising: a polymer matrix comprising carbon nanotubes dispersed in a polymer; optionally one or more colorants; and optionally one or more waxes.

## Description

### TECHNICAL FIELD OF THE DISCLOSURE

The present disclosure relates to toners comprising carbon nanotubes dispersed in a polymer matrix.

Two general types of carbon nanotubes exist: multi-walled carbon nanotubes (MWNTs) and single-walled carbon nanotubes (SWNTs). SWNTs have a cylindrical sheet-like, one-atom-thick shell of hexagonally-arranged carbon atoms, and carbon nanotubes are typically composed of multiple coaxial cylinders of ever-increasing diameter about a common axis. Thus, SWNTs can be considered to be the structure underlying carbon nanotubes and also carbon nanotube ropes, which are uniquely-arranged arrays of SWNTs. , "multi-walled carbon nanotubes (MWNTs)" are also referred to as "carbon nanotubes (CNTs)" and "nanotubes."

Moreover, methods of manufacturing composites containing carbon nanotubes are known. For example, U.S. Patent Nos. 5,643,502 and 6,299,812 describe carbon nanotubes that are physically, but not chemically, bonded to a polymer by using melt blowing and melt spinning. In these methods, monomer molecules are polymerized to form a polymer matrix. The carbon nanotubes are then added to the polymer matrix and mixed with polymer pellets, and the mixture is heated to a temperature greater than the melting point of the polymer. The liquefied mixture is extruded or spun, and then cooled to form a carbon nanotube/polymer composite.

Methods for cross-linking matrices of carbon nanotubes are described in U.S. Patent No. 6,203,814. The carbon nanotubes are first functionalized, and then reacted with cross-linking agents to form porous cross-linked nanotubes.

Methods of chemically bonding carbon nanotubes to polymers are also known. Three main methods thereof include: 1) melt-mixing, 2) solution- or paranosolvent-mediated processes, and 3) *in situ* polymerization.

*In situ* polymerization involves directly functionalizing carbon nanotubes with one or more functional moieties, which promotes dispersion of carbon nanotubes in polymer matrices. For example, U.S. Patent Application Publication No. 2003/0089893 describes a polymer composite of carbon nanotubes chemically bonded to a polymer matrix. The carbon nanotubes are functionalized by attaching chemical moieties to the carbons on the surface of the carbon nanotubes. The carbon nanotube-attached functional moieties can react with selected monomers. The functionalized nanotubes are dispersed in an appropriate medium such as water, alcohol or a liquefied monomer. The monomers bind to the chemical moiety of the carbon nanotubes, and are polymerized to produce polymer chains bound to the surface carbons of the nanotubes. The resulting carbon nanotube/polymer composite may include some polymer chains imbedded therein that are not attached to the nanotubes.

In particular, toners containing carbon nanotube/polyester composite resins exhibit enhanced properties. Depending on the concentration of carbon nanotubes used, a composite resin can be made more electrically conductive, and thus can be used as a component in a toner made by an emulsion/aggregation process for conductive developing methods. The emulsion/aggregation process is described herein. Additionally, adding only a small amount of carbon nanotubes to the resin composite can increase the nucleating site density of a crystalline polyester polymer. This increases the number of growing crystalline entities in the toner particle. Increasing the overall percent crystallinity of a crystalline polyester, a semi-crystalline polyester or an amorphous crystalline polyester improves the charge transfer in the toner particle.

Adding carbon nanotube/polyester resin composites to a toner improves the resistivity, conductivity and dielectric loss, of the toner. First, adding carbon nanotube/polyester resin composites to a toner increasing the resistivity of the toner. This is particularly useful because low toner resistivity is known to be an issue in the development of black emulsion/aggregation toner, especially in the development of ultra-low melt toners, where the crystalline polyester is responsible for depressing the toner's resistivity.

Moreover, adding carbon nanotube/polyester resin composites to a toner reduces dielectric loss in the toner. Dielectric loss is coupled with decrease in resistivity, and is much more pronounced than resistivity. Accordingly, a small decrease in resistivity produces a proportionately greater pronounced losses in dielectrics. Dielectric loss poses problems in image formation by way of fogging, toner scattering, or transfer skip.

Additionally, adding carbon nanotube/polyester resins composites to a toner improves conductivity of toners, particularly of emulsion/aggregation toners. Carbon black emulsion/aggregation toners are highly conductive and easily lose charge. With the addition of crystalline polyester to emulsion/aggregation toners, resistivity is further reduced, thereby making the toner particles more conductive. This makes the toners more suitable for conductive applications.

### SUMMARY

The present disclosure is directed to toners comprising carbon nanotube/polymer composite resins. Toners comprising carbon nanotube/polymer resins exhibit enhanced mechanical, chemical, thermal and electrical properties. Depending on the concentration of carbon nanotubes used, certain properties of the polymer resin may be altered. For example, when the carbon nanotube/polymer composite comprises carbon nanotubes from about 2% to about 20% by weight of the composite, the toner exhibits increased conductivity, and is thus suitable for conductive developing methods. Because carbon nanotubes have a high aspect ratio, only small amounts of carbon nanotubes need to be present in a toner in order to achieve the same conductivity as compared to conventional conductive additives. In another example, when the carbon nanotube/polymer composite comprises carbon nanotubes from about 0.05% to about 10% by weight of the polymer composite, the toners exhibit increased overall crystallinity, thereby improving charge transfer of the toner particle. Thus, such toners are suitable for electrographic printing applications. Also, at this carbon nanotube loading, the toners exhibit increased resistivity. As the price of carbon nanotubes has dramatically decreased, the toners according to the present disclosure offer the advantages of being both cost-effective and exhibiting improved properties.

### EMBODIMENTS

The present disclosure provides a toner comprising a resin comprising a polymerized mixture, optionally one or more colorants and optionally one or more waxes, wherein the polymerized mixture is a composite comprising carbon nanotubes and a polymer. In some embodiments, the polymer is a polyester, and the toner is an emulsion/aggregation toner.

The carbon nanotube/polymer composite according to the present disclosure is formed by known means in the art. The carbon nanotubes may be functionalized with one or more chemical moieties. The carbon nanotubes may be purified, if necessary, prior to functionalization. The chemical moiety on the carbon nanotubes generally covalently attach to a suitable monomer. The monomers then polymerize by any suitable means known in the art, thereby forming carbon nanotubes dispersed in a polymer matrix. This carbon nanotube/polymer composite resin can generally be incorporated into a toner.

This disclosure is not limited to particular embodiments described herein, and some components and processes may be varied by one of ordinary skill in the art, based on this disclosure. The terminology used herein is for the purpose of describing particular embodiments only, and is not intended to be limiting.

In this specification and the claims that follow, singular forms such as "a," "an," and "the" include plural forms unless the content clearly dictates otherwise.

In this specification and the claims that follow, "toner" is also referred to as "toner composition" and vice versa.

### Preparation for Nanotube Functionalization

The term "carbon nanotubes" refers to carbon tubes or fibers having very small diameters and includes fibrils, whiskers, buckytubes, and the like. Carbon nanotubes may be made with high purity and uniformity. Discrete nanotubes, aggregates of nanotubes, or both discrete and aggregate nanotubes may be suitable for use according to the present disclosure. In embodiments, the nanotubes of the present disclosure have a diameter less than 1µm, such as less than about 0.5 µm, less than about 0.1 µm, or less than about 0.05 µm, although the amounts can be outside of these ranges.

Carbon nanotubes may be obtained from commercial sources, or synthesized by known methods. For example, U.S. Patent No. 5,165,909 describes methods for making carbon fibrils. Examples of suitable carbon nanotube synthesis methods include chemical catalytic vapor deposition, arc discharge/laser ablation/HiPCO, and the like.

Prior to functionalization, the carbon nanotubes may be purified, if necessary, by any suitable means known in the art, such as the method described in U.S. Patent No. 5,698,175. Generally, the carbon nanotubes are purified by reacting with one or more suitable reagents, such as oxidation agents, nitration agents and sulfonation agents in a liquid phase, followed by washing and drying. Purification dissolves metal particles and other impurities present on the carbon nanotubes. Examples of suitable agents for use in this process include, without limitation, hydrochloric acid, hydrofluoric acid, hydrobromic acid, hydroiodic acid, sulfuric acid, oleum, nitric acid, citric acid, oxalic acid, chlorosulfonic acid, phosphoric acid, trifluoromethane sulfonic acid, glacial acetic acid, monobasic organic acids, dibasic organic acids, potassium permanganate, persulfate, cerate, bromate, hydrogen peroxide, dichromate and mixtures thereof. Sulfuric acid, nitric acid, permanganate, chlorosulfonic acids and combinations thereof are particularly useful for this purpose due to the efficacy of the oxidation and functionalization. For example, treatment with 3M HNO₃ is very effective in dissolving metal particles. Also, because nitric acid is a strong oxidizer, amorphous carbon can be removed by oxidation. Additional means of purifying carbon nanotubes includes dispersing the nanotubes in a solvent, and optionally filtering and drying them before being contacted with a functionalizing agent.

### Functionalization of Carbon Nanotubes

The carbon nanotubes can be functionalized by any means known in the art. For example, U.S. Patent Nos. 5,698,175 and 6,203,814 and U.S. Patent Application Publication No. 2006/0249711 describe methods for functionalizing carbon nanotubes. The functionalization results in one or more chemical moieties attached to the carbon nanotubes. The chemical functionalization promotes direct covalent coupling between the carbon nanotubes and the polyester matrix, and results in better dispersion of the nanotubes throughout the matrix and increased interaction of the nanotube surface groups with the polymer. It also results in improvement in crystallinity due to the effect of the nanotubes on the resulting morphology of a semicrystalline matrix. CNT act as nucleation sites to promote increase in polymer crystallinity

Generally, functionalized carbon nanotubes can be directly prepared by sulfonation, electrophilic addition to deoxygenated carbon nanotube surfaces, metallation, oxidation, or other suitable means. In some embodiments, oxidation is carried out by acid-treatment, wherein oxidation chemistry may be used to open the end caps of both single and multi-walled nanotubes to produce carboxyl, carbonyl and hydroxyl groups at the opened ends and defects on the side walls. Oxidation of nanotubes provides both improved stability and the ability to form electrostatically stabilized colloidal dispersions in water and alcohols.

Functionalized nanotubes according to the present disclosure may generally have the following formula:

[CₙH_{L}--]Rₘ

wherein n is an integer, L is a number less than 0.1n, m is a number less than 0.5n;

R is selected from SO₃H, COOH, NH₂, OH, R'CHOH, CHO, CN, COCl, halide, COSH, SH, COOR', SR', SiR'₃, Si(--OR'--)_{y}R'_{3-y}, Si(O--SiR'₂)OR', R", Li, AIR'₂, Hg-X, TIZ₂, Mg-X, poly m-aminobenzoic sulfonic acid, polyimide, and polyvinyl alcohol, as well as amino acid derivatives, and the like;
y is an integer equal to or less than 3;
R' is hydrogen, alkyl, aryl, cycloalkyl, or aralkyl, cycloaryl, or poly(alkylether);
R" is fluoroalkyl, fluoroaryl, fluorocycloalkyl, fluoroaralkyl or cycloaryl;
X is halide; and
Z is carboxylate or trifluoroacetate.

Non-uniformly substituted nanotubes are also useful. These include compositions of the formula [CₙH_{L}--]Rₘ where n, L, m, R and the nanotube itself are as defined above, provided that R does not contain oxygen, or, if R is an oxygen-containing group, COOH is not present.

Also useful are the production of functionalized nanotubes having the formula [CₙH_{L} --][R'--R]ₘ where n, L, m, R' and R have the same meaning as above. The carbon atoms, Cₙ, are surface carbons of a substantially cylindrical, carbon nanotube of a substantially constant diameter.

In some embodiments, the carbon nanotubes are functionalized with carboxylic acid moieties. Functionalization may be carried out, for example, via chlorate, nitric acid, or ammonium persulfate oxidation, and the like. Carboxylic acid-functionalized carbon nanotubes are particularly useful because they can serve as the starting point for preparing other types of functionalized carbon nanotubes. For example, alcohols or amides can be easily linked to the acid to give stable esters or amides. If the alcohol or amine is part of a di- or poly-functional molecule, then linkage through the O- or NH- leaves the other functionalities as pendant groups. These reactions can be carried out using any known methods for esterifying or aminating carboxylic acids with alcohols or amines. Amino groups can be introduced directly onto carbon nanotubes by treating the nanotubes with nitric acid and sulfuric acid to produce nitrated nanotubes, then reducing the nitrated nanotubes with a reducing agent, such as sodium dithionite, to produce amino-functionalized carbon nanotubes.

### Preparation of the Carbon Nanotube/Polymer Composite

To prepare the composites, the functionalized nanotubes are combined with a molar excess of a first monomer relative to the number of functional groups on the nanotubes. To do this, the functionalized nanotubes may be dispersed into a vehicle, such as water, an alcohol (e.g., ethylene glycol), or other liquid known in the art. The vehicle containing the functionalized carbon nanotubes is then combined with a first monomer. Alternatively, the functionalized carbon nanotubes may be directly combined with a molten or liquid first monomer.

The functionalized carbon nanotubes are dispersed in the first monomer. Dispersion may be implemented by use of ultrasonic sonicators or sonifiers or by use of other mechanical means such as a homogenizer, blender, mixer, and the like.

After dispersion, the functionalized carbon nanotubes are reacted with the first monomer to covalently attach the functional moieties on the carbon nanotubes to the first monomer. This may be done by any suitable means known in the art, such as by heating. Suitable heating methods include, but are not limited to, thermal heating, microwave heating, heat lamps, and combinations thereof. An excess of unreacted first monomer may be present in the product following the reaction.

Suitable first monomers that may be covalently attached to the functionalized nanotubes include, for example, diols having from 2 to 36 carbons, such as 1,8-octanediol, 1,9-nonanediol, 1,10-decanediol, 1,11-undecanediol, and 1,12-dodecanediol; polyamines such as ethylenediamine, pentamethylenediamine, hexamethylenediamine, diethylenetriamine, iminobispropylamine, phenylenediamine, xylylenediamine, and triethylenetetramine; aminocarboxylic acids such as 6-aminocaproic acid and ε-caprolactam; amino alcohols such as propanolamine; and the like.

Other suitable first monomers include, for example, 1,4-cyclohexanedimethanol, 1,2-propanediol, 1,3-propanediol, 1,4-butanediol, 2,2-dimethyl-1,3-propanediol, 1,6-hexanediol, 1,2-cyclohexanediol, 1,4-cyclohexanediol, 1,2-cyclohexanedimethanol, 1,3-cyclohexanedimethanol, Z,8-bis(hydroxymethyl)-tricyclo-[5.2.1.0]-decane wherein Z represents 3, 4, or 5; diols containing one or more oxygen atoms in the chain, such as, for example, ethylene glycol, diethylene glycol, triethylene glycol, dipropylene glycol, tripropylene glycol and the like; cycloaliphatic diols in their cis or trans configuration or as mixtures of both forms; 2-propane diol, 1,3-butanediol, neopentyl glycol, dibromoneopentyl glycol, 2,2,4-trimethylpentane-1,3-diol, pentanediol, hexanediol, 2,2-dimethylpropanediol, 2,2,3-trimethylhexanediol, heptanediol, dodecanediol, bis(hydroxyethyl)bisphenol A, bis(2-hyroxypropyl)-bisphenolA, xylenedimethanol, cyclohexanediol, bis(2-hydroxyethyl) oxide, dibutylene, 1,2-ethanediol, 1,5-pentanediol, 1,7-heptanediol; alkali sulfo-aliphatic diols such as sodio 2-sulfo-1,2-ethanediol, lithio 2-sulfo-1,2-ethanediol, potassio 2-sulfo-1,2-ethanediol, sodio 2-sulfo-1,3-propanediol, lithio 2-sulfo-1,3-propanediol, potassio 2-sulfo-1,3-propanediol, mixture thereof, and the like.

The functionalized carbon nanotubes covalently attached to a first monomer and any excess unreacted first monomer may be polymerized with a second monomer through the formation of ester or amide bonds to form a polymer matrix in which the carbon nanotubes are dispersed. Polymerization may generally be achieved by any known means in the art, such as by heating or via a bulk condensation reaction. The resultant polymer may be crystalline, semi-crystalline, amorphous, or a mixture thereof.

Suitable second monomers include, for example, organic acids, such as aliphatic, alicyclic, or aromatic dicarboxylic acids, 1,12-dodecananedioc acid, 1,4-cyclohexanedicarboxylic acid, 1,3-cyclohexanedicarboxylic acid, adipic acid, sebacic acid, 1,12-dodecanedioic acid, 2,6-naphthalenedicarboxylic acid, malonic acid, succinic acid, 2-methylsuccinic acid, 2,3-dimethylsuccinic acid, dodecylsuccinic acid, glutaric acid, adipic acid, 2-methyladipic acid, pimelic acid, azelaic acid, sebacic acid, terephthalic acid, isophthalic acid, phthalic acid, 1,2-cyclohexanedioic acid, 1,3-cyclohexanedioic acid, 1,4-cyclohexanedioic acid, glutaric anhydride, succinic anhydride, dodecylsuccinic anhydride, maleic anhydride, fumaric acid, maleic acid, itaconic acid, 2-methylitaconic acid; and dialkyl esters, wherein the alkyl groups are of one carbon chain to 23 carbon chain and are esters of malonate, succinate, 2-methyl succinate 2,3-dimethylsuccinate, dodecylsuccinate, glutarate, adipic acid, 2-methyladipate, pimelate, azeilate, sebacate acid, terephthalate, isophthalate, phthalate, 1,2-cyclohexanedioate, 1,3-cyclohexanedioate, and 1,4-cyclohexanedioate.

Other suitable second monomers may be, for example, dicarboxylic acids or diesters of dodecylsuccinic acid, dodecylsuccinic anhydride, suberic acid, dodecanediacid, dimethyl terephthalate, diethyl terephthalate, dimethylisophthalate, diethylisophthalate,dimethylphthalate, phthalicanhydride, diethylphthalate, dimethylsuccinate, dimethylfumarate, dimethylmaleate, dimethylglutarate, dimethyladipate, dimethyl dodecylsuccinate, oxalic acid, napthalene-2,6-dicarboxylic acid, naphthalene-2,7-dicarboxylic acid, cyclohexane dicarboxylic acid, malonic acid and mesaconic acid, a diester or anhydride thereof; and an alkali sulfo-organic diacid such as the sodio, lithio or potassium salt of dimethyl-5-sulfo-isophthalate, dialkyl-5-sulfo-isophthalate-4-sulfo-1,8-naphthalic anhydride, 4-sulfo-phthalic acid, dimethyl-4-sulfo-phthalate, dialkyl-4-sulfo-phthalate, 4-sulfophenyl-3,5-dicarbomethoxybenzene, 6-sulfo-2-naphthyl-3,5-dicarbometh-oxybenzene, sulfo-terephthalic acid, dimethyl-sulfo-terephthalate, 5-sulfo-isophthalic acid, dialkyl-sulfo-terephthalate, sulfoethanediol, 2-sulfopropanediol, 2-sulfobutanediol, 3-sulfopentanediol, 2-sulfohexanediol, 3-sulfo-2-methyl-pentanediol, 2-sulfo-3,3-dimethylpentanediol, sulfo-p-hydroxybenzoic acid, N,N-bis(2-hydroxyethyl)-2-amino ethane sulfonate, or mixtures thereof.

The polymers formed from the polymerization of the second monomers may be, but are not limited to, polycarbonates, polyamides, polyesters and polyurethanes, the polyamide of adipic acid and hexamethylene diamine (nylon 6,6), poly(6-aminohexanoic acid) (nylon-6), the polyamide of meta-phthalic acid and meta-diaminobenzene (Nomex), the polyamide of para-phthalic acid and para-diaminobenzene (Kevlar), the polyester of dimethyl terephthalate and ethylene glycol (Dacron), the polycarbonate of carbonic acid, the polycarbonate of diethyl carbonate and bisphenol A (Lexan), the polyurethane of carbamic acid, the polyurethane of isocyanate and alcohol, the polyurethane of phenyl isocyanate with ethanol, the polyurethane of toluene diisocyanate and ethylene glycol.

Other suitable polymers include, for example, poly(ethylene-adipate), poly(propylene-adipate), poly(butylene-adipate), poly(pentylene-adipate), poly(hexylene-adipate), poly(octylene-adipate), poly(ethylene-succinate), poly(propylene-succinate), poly(butylene-succinate), poly(pentylene-succinate), poly(hexylene-succinate), poly(octylene-succinate), poly(ethylene-sebacate), poly(propylene-sebacate), poly(butylene-sebacate), poly(pentylene-sebacate), poly(hexylene-sebacate), poly(octylene-sebacate), copoly(5sulfoisophthaloyl)-copoly(ethylene-adipate), copoly(5-sulfoisophthaloyl)-copoly(propylene-adipate), copoly(5-sulfoisophthaloyl)-copoly(butylene-adipate), copoly(5-sulfo-isophthaloyl)-copoly(pentylene-adipate), copoly(5-sulfo-isophthaloyl)-copoly(hexylene-adipate), copoly(ethylene-sebacate)-copoly(ethylene-fumarate), copoly(ethylene-dodecanoate)-copoly(ethylene-fumarate), copoly(nonylene-sebacate)-copoly(nonylene-fumarate), copoly(nonylene-dodecanoate)-copoly(nonylene-fumarate), copoly(decylene-sebacate)-copoly(decyylene-fumarate), copoly(decylene-dodecanoate)-copoly(decylene-fumarate), and copoly(butylene-fumarate)-copoly(hexylene-fumarate) and mixtures thereof.

Other suitable polymers include, for example, unsaturated polyester and/or its derivatives, including polyester resins and branched polyester resins, polyimide resins, branched polyimide resins, poly(styrene-acrylate) resins, crosslinked poly(styrene-acrylate) resins, poly(styrene-methacrylate) resins, crosslinked poly(styrene-methacrylate) resins, poly(styrenebutadiene) resins, crosslinked poly(styrene-butadiene) resins, alkali sulfonated-polyester resins, branched alkali sulfonated-polyester resins, alkali sulfonated-polyimide resins, branched alkali sulfonated-polyimide resins, alkali sulfonated poly(styrene-acrylate) resins, crosslinked alkali sulfonated poly(styrene-acrylate) resins, poly(styrene-methacrylate) resins, crosslinked alkali sulfonated-poly(styrene-methacrylate) resins, alkali sulfonated-poly(styrene-butadiene) resins, crosslinked alkali sulfonated poly(styrene-butadiene) resins, and crystalline polyester resins, poly(1,2-propylene-diethylene)terephthalate, polyethylene-terephthalate, polypropylene-terephthalate, polybutylene-terephthalate, polypentylene-terephthalate, polyhexalene-terephthalate, polyheptadene-terephthalate, polyoctalene-terephthalate, polyethylene-sebacate, polypropylene-sebacate, polybutylene-sebacate, polyethylene-adipate, polypropylene-adipate, polybutylene-adipate, polypentylene-adipate, polyhexalene-adipate polyheptadene-adipate, polyoctalene-adipate, polyethylene-glutarate, polypropylene-glutarate, polybutylene-glutarate, polypentylene-glutarate, polyhexalene-glutarate, polyheptadene-glutarate, polyoctalene-glutarate, polyethylene-pimelate, polypropylene-pimelate, polybutylene-pimelate, polypentylene-pimelate, polyhexalene-pimelate, polyheptadene-pimelate, poly(propoxylated bisphenol co-fumarate), poly(ethoxylated bisphenol co-fumarate), poly(butyloxylated bisphenol co-fumarate), poly(co-propoxylated bisphenol co ethoxylated bisphenol co-fumarate), poly(1,2-propylene fumarate), poly(propoxylated bisphenol co-maleate), poly(ethoxylated bisphenol co-maleate), poly(butyloxylated bisphenol co-maleate), poly(co-propoxylated bisphenol co ethoxylated bisphenol co-maleate), poly(1,2-propylene maleate), poly(propoxylated bisphenol co-itaconate), poly(ethoxylated bisphenol co-itaconate), poly(butyloxylated bisphenol co-itaconate), poly(co-propoxylated bisphenol co ethoxylated bisphenol co-itaconate), poly(1,2-propylene itaconate), or mixtures thereof.

Further still, the polymer may be a copolymer of any of eicosene and styrene; eicosene and undecylenyl halides; eicosene and undecylenyl alcohol; eicosene and undecylenyl acid; eicosene and alkali metal salts of undecylenyl acid; eicosene and alkyl and aryl undecylenic acid esters; eicosene and trialkylsilyl undecylenic acid esters; eicosene and iodo-eicosene; eicosene and quaternary ammonium undecylene; eicosene and amino undecylene; and eicosene and amido undecylene.

Moreover, the polymer may be styrene acrylates, styrene methacrylates, butadienes, isoprene, acrylonitrile, acrylic acid, methacrylic acid, beta-carboxy ethyl acrylate, polyesters, poly(styrene-butadiene), poly(methyl styrenebutadiene), poly(methyl methacrylate-butadiene), poly(ethyl methacrylate-butadiene), poly(propyl methacrylate-butadiene), poly(butyl methacrylate-butadiene), poly(methyl acrylate-butadiene), poly(ethyl acrylate-butadiene), poly(propyl acrylate-butadiene), poly(butyl acrylate-butadiene), poly(styrene-isoprene), poly(methyl styrene-isoprene), poly(methyl methacrylate-isoprene), poly(ethyl methacrylate-isoprene), poly(propyl methacrylate-isoprene), poly(butyl methacrylate-isoprene), poly(methyl acrylate-isoprene), poly(ethyl acrylate-isoprene), poly(propyl acrylate-isoprene), poly(butyl acrylate-isoprene); poly(styrene-propyl acrylate), poly(styrene-butyl acrylate), poly(styrenebutadiene-acrylic acid), poly(styrene-butadiene-methacrylic acid), poly(styrene-butyl acrylate-acrylic acid), poly(styrene-butyl acrylate-methacrylic acid), poly(styrene-butyl acrylate-acrylonitrile), poly(styrene-butyl acrylate-acrylonitrile-acrylic acid), and styrene/butyl acrylate/carboxylic acid terpolymers, styrene/butyl acrylate/beta-carboxy ethyl acrylate terpolymers, PLIOTONE ^{™} available from Goodyear, and mixtures thereof.

The carbon nanotube content of the carbon nanotube/polymer composite is generally from about 0.05% to about 20% by weight of the composite, such as from about 0.05% to about 5%, or from about 5% to about 15%, or from about 7% to about 10% by weight of the composite. In one embodiment, the carbon nanotube content is from about 0.5% to 8% by weight of the composite.

### Incorporation Into a Toner

The carbon nanotube/polymer composite may be incorporated into a toner. In some embodiments, the toner is an emulsion/aggregation toner. The toner may be produced by any known means in the art. The toner may optionally include one or more of the additives described later in the specification.

The toner may be produced by an emulsion/aggregation procedure. Any suitable emulsion/aggregation procedure may be used in forming the emulsion/aggregation toner particles without restriction. These procedures typically include the basic process steps of at least aggregating an emulsion containing polymer binder and one or more optional waxes, one or more optional colorants, one or more surfactants, an optional coagulant, and one or more additional optional additives to form aggregates, subsequently coalescing or fusing the aggregates, and then recovering, optionally washing and optionally drying the obtained emulsion/aggregation toner particles. However, in embodiments, the process further includes carbon nanotube/polymer composite resins in the aggregation step.

Suitable emulsion/aggregation processes for the preparation of toners that may be modified to include carbon nanotube/polymer composite as described herein, are described in a number of Xerox patents, such as U.S. Patent Nos. 5,290,654; 5,278,020; 5,308,734; 5,370,963; 5,344,738; 5,403,693; 5,418,108; 5,364,729; and 5,346,797. Also of interest are U.S. Patent Nos. 5,348,832; 5,405,728; 5,366,841; 5,496,676; 5,527,658; 5,585,215; 5,650,255; 5,650,256; 5,501,935; 5,723,253; 5,744,520; 5,763,133; 5,766,818; 5,747,215; 5,827,633; 5,853,944; 5,804,349; 5,840,462; 5,869,215; 5,863,698; 5,902,710; 5,910,387; 5,916,725; 5,919,595; 5,925,488; and 5,977,210. The appropriate components and process aspects of each of the foregoing U.S. Patents may be selected for the present composition and process in embodiments thereof.

In embodiments, the toner process comprises forming a toner particle by mixing the carbon nanotube/polymer composite, an optional wax, an optional colorant dispersion, and an optional coagulant while blending at high speeds. The resulting mixture having a pH of, for example, about 2.5 to about 3.5, is aggregated by heating to a temperature below the polymer resin T_{g} to provide toner size aggregates. Optionally, latex can be added to the formed aggregates to provide a shell over the formed aggregates. The pH of the mixture is then changed, for example by adding a sodium hydroxide solution until a pH of about 7.0 is achieved, and optionally also adding a metal sequestering agent such as tetrasodium ethylene diamine tetracetate. The temperature of the mixture is then raised to above the resin Tg, such as to about 95°C. After about 30 minutes, the pH of the mixture is reduced to a value sufficient to coalesce or fuse the aggregates to provide a composite particle upon further heating, such as from about 5.5 to about 6.5. The fused particles can be measured for shape factor or circularity, such as with a Sysmex FPIA 2100 analyzer, until the desired shape is achieved.

The mixture is allowed to cool to room temperature (about 20°C to about 25°C) and is optionally washed to remove the surfactant. The toner is then optionally dried.

The toner particles may be made to have the following physical properties when no external additives are present on the toner particles.

The toner particles can have a surface area, as measured by the well known BET method, of about 1.3 to about 6.5 m²/g. For example, for cyan, yellow and black toner particles, the BET surface area can be less than 2 m²/g, such as from about 1.4 to about 1.8 m²/g, and for magenta toner, from about 1.4 to about 6.3 m²/g, although the amounts can be outside of these ranges.

It is also desirable to control the toner particle size and limit the amount of both fine and coarse toner particles in the toner. In an embodiment, the toner particles have a very narrow particle size distribution with a lower number ratio geometric standard deviation (GSD) of approximately 1.15 to approximately 1.30, or approximately less than 1.25. The toner particles of the present disclosure also can have a size such that the upper geometric standard deviation (GSD) by volume is in the range of from about 1.15 to about 1.30, such as from about 1.18 to about 1.22, or less than 1.25, although the amounts can be outside of these ranges. These GSD values for the toner particles of the present disclosure indicate that the toner particles are made to have a very narrow particle size distribution.

Shape factor is also a control process parameter associated with the toner being able to achieve optimal machine performance. The toner particles can have a shape factor of about 105 to about 170, such as about 110 to about 160, SF1*a. Scanning electron microscopy (SEM) is used to determine the shape factor analysis of the toners by SEM and image analysis (IA) is tested. The average particle shapes are quantified by employing the following shape factor (SF1*a) formula: SF1*a = 100πd²/(4A), where A is the area of the particle and d is its major axis. A perfectly circular or spherical particle has a shape factor of exactly 100. The shape factor SF1*a increases as the shape becomes more irregular or elongated in shape with a higher surface area. In addition to measuring shape factor SF, another metric to measure particle circularity is being used on a regular basis. This is a faster method to quantify the particle shape. The instrument used is an FPIA-2100 manufactured by Sysmex. For a completely circular sphere the circularity would be 1.000. The toner particles can have circularity of about 0.920 to 0.990 and, such as from about 0.940 to about 0.980.

The toner particles can be blended with external additives following formation. Any suitable surface additives may be used in embodiments. Most suitable are one or more of SiO₂, metal oxides such as, for example, TiO₂ and aluminum oxide, and a lubricating agent such as, for example, a metal salt of a fatty acid (e.g., zinc stearate (ZnSt), calcium stearate) or long chain alcohols such as UNILIN 700, as external surface additives. In general, silica is applied to the toner surface for toner flow, tribo enhancement, admix control, improved development and transfer stability and higher toner blocking temperature. TiO₂ is applied for improved relative humidity (RH) stability, tribo control and improved development and transfer stability. Zinc stearate is optionally also used as an external additive for the toners of the disclosure, the zinc stearate providing lubricating properties. Zinc stearate provides developer conductivity and tribo enhancement, both due to its lubricating nature. In addition, zinc stearate enables higher toner charge and charge stability by increasing the number of contacts between toner and carrier particles. Calcium stearate and magnesium stearate provide similar functions. In embodiments, a commercially available zinc stearate known as Zinc Stearate L, obtained from Ferro Corporation, can be used. The external surface additives can be used with or without a coating.

In embodiments, the toner contains, for example, titania in about 0.1 to about 5 weight percent of the total toner weight, silica in about 0.1 to about 8 weight percent of the total toner weight and zinc stearate in about 0.1 to about 4 weight percent of the total toner weight.

The toner particles of the disclosure can optionally be formulated into a developer composition by mixing the toner particles with carrier particles. Illustrative examples of carrier particles that can be selected for mixing with the toner composition prepared in accordance with the present disclosure include those particles that are capable of triboelectrically obtaining a charge of opposite polarity to that of the toner particles. Accordingly, in one embodiment the carrier particles may be selected so as to be of a negative polarity in order that the toner particles that are positively charged will adhere to and surround the carrier particles. Illustrative examples of such carrier particles include iron, iron alloys, steel, nickel, iron ferrites, including ferrites that incorporate strontium, magnesium, manganese, copper, zinc, and the like, magnetites, and the like. Additionally, there can be selected as carrier particles nickel berry carriers as disclosed in U.S. Patent No. 3,847,604, comprised of nodular carrier beads of nickel, characterized by surfaces of reoccurring recesses and protrusions thereby providing particles with a relatively large external area. Other carriers are disclosed in U.S. Patent Nos. 4,937,166 and 4,935,326.

The selected carrier particles can be used with or without a coating, the coating generally being comprised of acrylic and methacrylic polymers, such as methyl methacrylate, acrylic and methacrylic copolymers with fluoropolymers or with monoalkyl or dialkylamines, fluoropolymers, polyolefins, polystyrenes, such as polyvinylidene fluoride resins, terpolymers of styrene, methyl methacrylate, and a silane, such as triethoxy silane, tetrafluoroethylenes, other known coatings, and the like.

The carrier particles can be mixed with the toner particles in various suitable combinations. The toner concentration is usually about 2 to about 10 percent by weight of toner and about 90 to about 98 percent by weight of carrier. However, different toner and carrier percentages may be used to achieve a developer composition with desired characteristics.

### Colorants

The toner compositions may be produced as a colored toner by adding a colorant during toner production. Any desired or effective colorant can be employed in the toner compositions, including pigment, dye, mixtures of pigment and dye, mixtures of pigments, mixtures of dyes, and the like. The carbon nanotubes/polymer resins may also, in embodiments, impart some or all of the colorant properties to the toner compositions.

Suitable colorants for use in the toner compositions include, without limitation, carbon black, lamp black, iron black, ultramarine, Nigrosine dye, Aniline Blue, Du Pont Oil Red, Quinoline Yellow, Methylene Blue Chloride, Phthalocyanine Blue, Phthalocyanine Green, Rhodamine 6C Lake, Chrome Yellow, quinacridone, Benzidine Yellow, Malachite Green, Hansa Yellow G, Malachite Green hexalate, oil black, azo oil black, Rose Bengale, monoazo pigments, disazo pigments, trisazo pigments, tertiary ammonium salts, metallic salts of salicylic acid and salicylic acid derivatives, Fast Yellow G, Hansa Brilliant Yellow 5GX, Disazo Yellow AAA, Naphthol Red HFG, Lake Red C, Benzimidazolone Carmine HF3C, Dioxazine Violet, Benzimidazolone Brown HFR, Aniline Black, titanium oxide, Tartrazine Lake, Rhodamine 6G Lake, Methyl Violet Lake, Basic 6G Lake, Brilliant Green lakes, Hansa Yellow, Naphtol Yellow, Watching Red, Rhodamine B, Methylene Blue, Victoria Blue, Ultramarine Blue, and the like.

The amount of colorant can vary over a wide range, for instance, from about 3 to about 20 weight percent of the toner weight, and combinations of colorants may be used.

### Waxes

One or more waxes may be added to the toner in order to raise the image density and to effectively prevent the offset to a reading head and the image smearing. The wax can be present in an amount of, for example, from about 0.1 to about 10 percent weight, such as in an amount of from about 1 to about 6 percent weight based on the total weight of the toner, although the amounts can be outside of these ranges. Examples of suitable waxes include, but are not limited to, polyolefin waxes, such as low molecular weight polyethylene, polypropylene, a fluorocarbon-based wax (Teflon), or Fischer-Tropsch wax, copolymers thereof, mixtures thereof, and the like.

### Surfactants

Examples of nonionic surfactants that may be used in the toner according to the present disclosure include, without limitation, polyvinyl alcohol, polyacrylic acid, methalose, methyl cellulose, ethyl cellulose, propyl cellulose, hydroxy ethyl cellulose, carboxy methyl cellulose, polyoxyethylene cetyl ether, polyoxyethylene lauryl ether, polyoxyethylene octyl ether, polyoxyethylene octylphenyl ether, polyoxyethylene oleyl ether, polyoxyethylene sorbitan monolaurate, polyoxyethylene stearyl ether, polyoxyethylene nonylphenyl ether, dialkylphenoxypoly(ethyleneoxy)ethanol, mixtures thereof, and the like.

Examples of suitable cationic surfactants include, without limitation, alkylbenzyl dimethyl ammonium chloride, dialkyl benzenealkyl ammonium chloride, lauryl trimethyl ammonium chloride, alkylbenzyl methyl ammonium chloride, alkyl benzyl dimethyl ammonium bromide, benzalkonium chloride, cetyl pyridinium bromide, C₁₂, C₁₅, C₁₇ -trimethyl ammonium bromides, halide salts of quatemized polyoxyethylalkylamines, dodecylbenzyl triethyl ammonium chloride, mixtures thereof, and the like.

A suitable amount of surfactant can be selected, such as in an amount of about 0.1 to about 10 percent weight of the toner weight, such as about 0.2 to about 5 percent weight, although the amounts can be outside of these ranges. The choice of particular surfactants, or combinations thereof, as well as the amounts of each to be used are within the purview of those skilled in the art.

Further, olefin-maleic acid, anhydride copolymer, and the like, may be added to obtain toner images having high quality without deterioration of developing property. **Antioxidants**

The toner may also optionally contain an antioxidant. Antioxidants protect the images from oxidation and also protect the toner components from oxidation during the heating portion of the toner preparation process. Specific examples of suitable antioxidants include NAUGUARD^{®} series of antioxidants, such as NAUGUARD^{®} 445, NAUGUARD^{®} 524, NAUGUARD^{®} 76, and NAUGUARD^{®} 512 (commercially available from Uniroyal Chemical Company), the IRGANOX^{®} series of antioxidants such as IRGANOX^{®} 1010 (commercially available from Ciba Geigy), and the like. The antioxidant may be present in the toner in any desired or effective amount, such as in an amount of from at least about 0.01 to about 20 percent weight of the total toner weight, such as about 0.1 to about 5 percent weight of the toner weight or from about 1 to about 3 percent weight of the toner weight, although the amount may be outside of these ranges.

### Clarifiers

Clarifiers may also be optionally added to the toner, such as UNION CAMP^{®} X37-523-235 (commercially available from Union Camp); tackifiers, such as FORAL^{®} 85, a glycerol ester of hydrogenated abietic (rosin) acid (commercially available from Hercules), FORAL^{®} 105, a pentaerythritol ester of hydroabietic (rosin) acid (commercially available from Hercules), CELLOLYN^{®} 21, a hydroabietic (rosin) alcohol ester of phthalic acid (commercially available from Hercules), ARAKAWA KE-311 Resin, a triglyceride of hydrogenated abietic (rosin) acid (commercially available from Arakawa Chemical Industries, Ltd.), synthetic polyterpene resins such as NEVTAC^{®} 2300, NEVTAC^{®} 100, and NEVTAC^{®} 80 (commercially available from Neville Chemical Company), WINGTACK^{®} 86, a modified synthetic polyterpene resin (commercially available from Goodyear), and the like; adhesives, such as VERSAMID^{®} 757, 759, or 744 (commercially available from Henkel), plasticizers, such as UNIPLEX^{®} 250 (commercially available from Uniplex), the phthalate ester plasticizers commercially available from Monsanto under the trade name SANTICIZER^{®}, such as dioctyl phthalate, diundecyl phthalate, alkylbenzyl phthalate (SANTICIZER^{®} 278), triphenyl phosphate (commercially available from Monsanto), KP-140^{®}, a tributoxyethyl phosphate (commercially available from FMC Corporation), MORFLEX^{®} 150, a dicyclohexyl phthalate (commercially available from Morflex Chemical Company Inc.), trioctyl trimellitate (commercially available from Eastman Kodak Co.), and the like. Such additives may be included in conventional amounts for their usual purposes.

### Charge-Controlling Agent

Additionally, a charge-controlling agent may be added to the toner in order to help improve the electrification level and an electrification rate (index of electrification to specific charge level during short time) and to obtain excellent fluidity.

There are two types of charge-regulating agent generally suitable for adding to the toner: a charge-controlling agent (CCA) having a function to control charge (electrification amount) within a specific range and a charge-controlling resin (CCR) having a function to reinforce charge (electrification amount). One, or both, types of agents may be added to the toner.

As the charge-controlling agent (CCA), azines, direct dyes comprising azines, nigrosin compounds, metallic salts, alkoxylated amines, alkylamides, and quaternary ammonium salts, and combination of two of these compounds can be used. In particular, nigrosin compounds enable rapid start-up of electrification amount and easy control of saturated electrification amount.

As the charge-controlling resin (CCR), a resin or an oligomer having quaternary ammonium salt; a resin or an oligomer having carboxylic acid salt; a resin or an oligomer having carboxylic acid residue or combinations of two of these compounds can be used.

In one embodiment, the toner includes styrene-acryl copolymer having quaternary ammonium salt, carboxylic acid salt, or carboxylic acid residue, which allows further promotion of electrification amount.

The loading of a charge-control agent may be from about 0.1 to about 10 weight percent of the toner weight. In case the loadings of the charge-regulating agent is less than 0.1 weight percent, regulation of charge may not effectively function. On the other hand, in case the loadings of charge-regulating agent is more than 10 weight percent, the dispersibility and the durability of toner may decrease. Therefore, in order to balance the charge-regulating function, the durability of the toner, and other properties well, the loadings of the charge-regulating agent can be about 0.5 weight percent to about 8 weight percent, such as about 1.0 to about 5 weight percent, although the amounts can be outside of these ranges.

### Additional Additives

The toner may further contain one or more additives for their known purposes. For example, suitable additives include a fluidization agent such as colloidal silica; lubricants such as metal salts of fatty acids; silica; a spacing agent; a dryer; a dispersant; a humectant; a stabilizer; a thickening agent; a gelatinizing agent; a defoaming agent and an initiator for photopolymerization.

### Printing of Toner

For printing the toner on a substrate, any suitable printing method may be used. For example, suitable methods include, without limitation, roll-to-roll high volume analog printing methods, such as gravure, rotogravure, flexography, lithography, etching, screenprinting, and the like. Additionally, thermography, electrophotography, electrography, laser induced transfer, ot a combination thereof may be used. If a laser induced transfer digital printing method is used, exemplary methods of such method are dye sublimination, ablation, melt transfer, or film transfer.

The toner according to the present disclosure may generally be printed on a suitable substrate such as, without limitation, paper, glass art paper, bond paper, paperboard, Kraft paper, cardboard, semi-synthetic paper or plastic sheets, such as polyester or polyethylene sheets, and the like. These various substrates can be provided in their natural state, such as uncoated paper, or they can be provided in modified forms, such as coated or treated papers or cardboard, printed papers or cardboard, and the like.

### Applications of the Toner

A variety of possible application of the toner produced by the present disclosure exists. The toner may generally be used for developing electrostatic latent image formed by electrographotography, electrostatic recording, iconography, xerography and the like. Moreover, the toner may be used for other suitable applications.

### EXAMPLES

Example 1 describes the functionalization of carbon nanotubes. Examples 2 and 3 describe the synthesis of carbon nanotubes/semi-crystalline polyester resin compositions using the process described in Example 1, except that different amounts of the carbon nanotubes were used. Comparative Examples 1 and 2 describe preparing the resin composition according Examples 2 and 3, respectively, except that functionalized carbon nanotubes were omitted.

### Example 1: Preparation of carboxylic acid-functionalized MWNTs using nitric acid, hydrochloric acid and air oxidation (Sample ID VF564)

MWNTs were purified in a three-step process. In the first step, 5.0 g of MWNTs were treated with 3 M HNO₃ via reflux process for 24 hr and 47 min at 60°C. 745 g of 3 M HNO₃ solution (201.15 g of 70% nitric acid and 543.85 g of distilled water) was added to the 5.0 g of MWNTs (Sigma-Aldrich), and were allowed to react for 24 hours. Next, the MWNTs/acid mixture was diluted with deionized water, and centrifuged for 1 hour at 3000g. The MWNT pellet was resuspended in deionized water. After a second round of resuspension in deionized water, followed by centrifugation for 1 hour at 3000g, the pH of the solution was pH 0.26. Following another wash, the pH of the solution was 1.50. Following another wash, the solution had a pH of 1.84

In the second step, the MWNTs were further treated with HCl to dissolve metal oxides. A 5 M HCl solution was prepared by adding 367.06 g of 37% hydrochloric acid to 377.94 g distilled water. The molarity of the HCl solution was diluted a bit because rinsing water was needed to get the carbon nanotubes into the flask. A reflux system was set up with an overpressure valve connected to the Schlenk line to allow expansion of the media and avoid explosions. The reflux ran for 7 hours at 120°C, and produced relatively pure MWNTs suspended in HCl. The MWNTs were isolated from the HCl solution via centrifugation for 1 hour at 3000g.

Subsequently, the MWNTs were washed three times, and produced a solution with a pH of 1.58. After redispersing in deionized water and centrifuging and for an additional 1.5 hours at 3000g, the pH was 2.53. After redispersing in deionized water and centrifuging for another 1.5 hours at 3000g, the pH was 3.01. The MWNTs were redispersed in water and centrifuged at 3000g for 1.5 hours. The pH was 3.59 and no further washing was done. The MWNTs were then dispersed in 10 ml deionized water and placed in an oven in order to evaporate off water.

In the third step of the purification, air oxidation was performed, in which MWNTs were purified by burning off acid-treated materials. MWNTs and non-nanotubes have different oxidation temperatures. 510°C is an optimum temperature to bum out non-nanotube carbon materials, as the weight of carbon nanotubes remains unchanged from 510°C to 645°C. 4.6965 g of unpurified MWNTs were combusted in air at 510°C for 1 hour. Non-nanotube impurities were burned off, leaving 3.258 g of purified MWNTs, or a 69.67% yield.

### Example 2: Preparation of 0.075% MWNTs/polyester composite (Sample ID VF566)

A 500 g quantity of 1,9-nonanediol was transferred into a 3 L reaction kettle reactor and melt mixed to 60°C on a hot plate with occasional stirring. About 0.81 g of MWNTs produced in Example 1 (0.075% relative to 1080 g polymer theoretical yield) was added to the molten 1,9-nonanediol. After the MWNTs were well-dispersed in the diol (and possibly esterificated), the glass reaction kettle was removed from the hot plate, and 719 g of 1,12-dodecanedioic acid and 1.30 g Fascat 4100 catalyst were added to the reactor. The kettle was then transferred to the heating mantle. The heating mantle air flow, the Argon purge, heater electrical box, Lauda condenser oil bath and water condenser were turned on. The stirrer was turned on as soon as the mixture started to melt; the kettle and bottom of hot condenser were wrapped with Kim towels and foil wrapped to retain heat. The reagents started melting around 80°C and the reaction proceeded. The temperature was increased to 170°C over 60 minutes and was maintained at 170°C for 5 hours. The reaction was blanketed with argon and held at 120°C overnight.

The next day, approximately 85 ml of condensed water was collected in a graduated cylinder. Low vacuum was applied using a small lab vacuum (grey standard) for about 27 min. Both cold and hot condensers were left on during this step. The total water yield increased to about 95 ml through the use of the vacuum pump. Both condensers were removed. Argon was purged through the system at 170°C. Sampling proceeded before Edwards High vacuum was applied. The viscosity was 2.64 Pa Sec. The reaction was blanketed with argon and held at 120°C overnight.

The following day, the temperature was increased to 170°C over 30 min. Sampling proceeded before Edwards High vacuum was applied. Viscosity was 8.85 Pa sec. The reaction was heated without vacuum until the viscosity reached about 11 Pa sec. The resin was cooled to about 170°C before discharging out via pouring by hand. The resin was cooled in a pan, broken down and then crushed in a delumper apparatus. A sample of the resin was submitted for acid value, GPC, DSC, viscosity and ICP (Sn). The final viscosity was 12.4 Pa sec at 11.7 γ. The acid value was 10.2 mg KOH/g.

### Example 3: Preparation of 0.185% MWNTs/polyester composite (Sample ID VF567)

A 500 g quantity of 1,9-nonanediol was transferred into a 3 L glass reaction kettle and melt mixed to 60°C with occasional stirring. About 2.0 g of MWNTs (0.185% relative to 1080 g polymer mass) was added to the molten nonanediol. After the carbon nanotube were well-dispersed in the diol (and possibly esterificated), the glass reactor was removed from the hot plate. 719 g of 1,12-dodecanedioic acid and 1.30 g of Fascat 4100 catalyst were added to the reactor. The kettle was then transferred to the heating mantle. The heating mantle air flow was turned on, along with the Argon purge, heater electrical box, Lauda condenser bath and water condenser. The stirrer was turned on as soon as the mixture started to melt; the kettle and the bottom of the hot condenser were wrapped with Kim towels and foil to insulate the system. The reagents started melting around 80°C and reaction proceeded. The temperature was increased to 170°C over 60 minutes and held there for 6 hours. While blanketing the reaction under argon, the reaction was held at 120°C overnight.

Overnight, about 42 ml of water was condensed and collected in graduated cylinder. The temperature was brought back up from 120°C to 170°C. Low vacuum was applied using the small lab vacuum (grey standard) for about 30 minutes. Both cold and hot condensers were left on during this step. Still at 170°C, the graduated cylinder was attached to an adapter with a vacuum line to pull more water/glycol, and the total water/glycol yield increased to about 51 ml. Both condensers were removed. Argon was purged through the system at 170°C. The Edwards high vacuum was applied for the first 193 minutes; at 357 min the viscosity was 26.6 Pa sec. The run was stopped at 380 minutes. The resin was discharged out via pouring by hand. The resin was cooled in a pan, broken down and then crushed in a delumper apparatus. A sample of the resin was submitted for acid value, GPC, DSC, viscosity and ICP (Sn). The final viscosity was 35 Pa sec at 11.7 γ. The acid value was 7.59 mg KOH/g.

### Comparative Example 1: Preparation of nominal resin containing no carbon nanotube (Sample ID VF568)

A 719 gram quantity of 1,12-dodecanedioc acid monomer, 500 gram of 1,9-nonanediol monomer and 1.303 g Fascat 4100 catalyst were all weighed out into a 3L glass reaction kettle. The kettle was then transferred to the heating mantle. The heating mantle air flow was turned on, along with the argon purge, heater electrical box, Lauda condenser bath and water condenser. The stirrer was turned on as soon as the mixture started to melt; the kettle and the bottom of the hot condenser were wrapped with Kim towels and foil to insulate the system. The reagents started melting around 80°C; the temperature was increased to 170°C over 60 minutes and held there for 5 hours. About 45 ml of water condensed and was collected in graduated cylinder. While blanketing the reaction under argon, temperature was dropped to 120°C until the next day.

The next day, the temperature was increased from 120°C to 170°C. A graduated cylinder was attached to an adapter with a vacuum line to pull more water off. Low vacuum was applied using a small lab vacuum (grey standard) for about 34 min. Both cold and hot condensers were left on during this step. The total water condensate yield increased to about 50 ml using the vacuum pump. Both condensers were removed. Argon was purged through the system at 170°C. The Edwards High vacuum was applied. Viscosity was checked at 257 minutes at 170°C, and was 6.9 Pa Sec. At 323 minutes, the reaction was stopped. The resin was discharged at 170°C via pouring by hand. The resin was cooled in a pan, broken down and then crushed in a delumper apparatus. A sample of the resin was submitted for acid value, GPC, DSC, viscosity and ICP (Sn). The final viscosity was 13.5 Pa sec at 11.7 γ. The acid value was 9.99 mg KOH/g.

### Comparative Example 2: Preparation of nominal resin containing no carbon nanotube (Sample ID VF559)

A 719 gram quantity of 1,12-dodecanedioc acid monomer, 500 gram 1,9-nonanediol and 1.303 gram Fascat 4100 catalyst were weighed out into a 3L glass reaction kettle. The heating mantle air flow was turned on, along with the nitrogen purge, heater electrical box, Lauda condenser bath and water condenser. The stirrer was turned on as soon as the mixture started melting; the kettle and the bottom of the hot condenser were wrapped with Kim towels and foil to insulate the system. Reagents started melting around 80°C; the temperature was first increased to 165°C over 90 minutes and held there for 2 hours. Next, the temperature was further increased to 190°C over 60 minutes and held there for 5 hours. About 35 ml of water condensed and was collected in graduated cylinder. While blanketing the reaction under nitrogen, the temperature was dropped to 120°C until the next day.

Next day, the temperature was increased to 190°C over 60 minutes. Both cold and hot condensers were left on during this step. At 190°C, the graduated cylinder was attached to an adapter with a vacuum line to pull more water off. Low vacuum was applied using the small lab vacuum (grey standard) for about 20 minutes. The total water distillate yield increased to 50 ml with help of the vacuum pump. The vacuum system was switched to the Edwards High vacuum system and both condensers were removed. Vacuum and heat were applied to the system most of the day and viscosity of the resin reached about 12.55 Pa sec.

On the third day, the system was reheated to 190°C and vacuum was applied. After 45 minutes the viscosity was 32.5 Pa sec and the heat was turned off The resin was cooled to about 170°C before discharging out via pouring by hand. The resin was cooled in a pan, broken down and then crushed in a delumper apparatus. A sample of the resin was submitted for acid value, GPC, DSC, viscosity and ICP (Sn). The final viscosity was 42.7 Pa sec at 11.7 γ. The acid value was 8.11 mg KOH/g.

### Preparation of Controls

A crystalline polyester control (Sample ID VF568) and Sample ID VF567 containing 0.075% MWNTs were heated on a Linkam Hot Stage, model LTS350 with observations being made using a Zeiss Axioplan polarizing microscope. Both samples were heated at 10°C/min to 120°C, and then held at that temperature for 5 minutes before being cooled at 3°C/min to 40°C. Micrographs of the cooled, recrystallized materials were acquired using cross-polarized light on the Zeiss microscopy. The crystalline spherulites of pure crystalline polyester were larger in size, but after the addition of the carbon nanotubes, the size was significantly reduced. The reduced size of the crystalline domain suggest that more nucleating sites were available for growth, thereby attributing to the subsequent increase in the overall crystallinity of the sample.

### The Effect of MWNTs on Recrystallization

Table 1 shows MWNT/crystalline polyester composite differential scanning calorimeter (DSC) and Percent Change in Recrystallization Data. DSC is a good tool for measuring changes in crystallinity in polymers. The % change in recrystallization is calculated by subtracting the ΔH (2^{nd} melt Tₘ) of carbon nanotube/crystalline polyester composites from the control, then dividing the difference by the control ΔH (2^{nd} melt Tₘ) and multiplying by 100. The results verify that synthesizing carbon nanotube/crystalline polyester composites increases the amount of crystallinity in the polymer. If the polymer could be obtained in 100% crystalline form, ΔH (heat of fusion) could be measured, but all crystalline polymers are semicrystalline. Moreover, other methods for determining ΔH_{f} exist such as spectroscopic methods, X-ray or nuclear magnetic resonance that requires normalization of peaks (which is very tedious and potentially complicated), and a DSC performed on a sample with known fraction crystallinity (but this can also be difficult to apply to polymers). Here, the total % crystallinity of the samples was not calculated; only the change in crystallinity of carbon nanotube/crystalline polyester composites compared to the control or non-carbon nanotube containing crystalline polyester was calculated.
**Table 1** CPE/MWNT Composite DSC and % Change in Recrystallization Data

| **ID /Type of Crystalline** **Polyester (CPE)** | **Wt-% of MWNT** | **Tₘ (°C)** | **T_{rc} (°C)** | **Tₘ (°C)** **2^{nd} melt** | Δ**H (J/g) for** **2^{nd} melt Tₘ** | **% Change in Recrystallization** |
|---|---|---|---|---|---|---|
| VF568 (CPE control); η = 12.4 Pa•sec | 0% | 76.61 | 56.60 | 74.01 | 126.1 | +5.00% |
| VF566 (with MWNT); η = 13.5 Pa•sec | 0.075% | 75.44 | 58.78 | 73.19 | 132.4 | |
| VF559 (CPE control); η = 35.0 Pa•sec | 0% | 75.42 | 58.44 | 72.93 | 120.0 | +4.46% |
| VF567 (with MWNT); η = 42.7 Pa•sec | 0.185% | 76.44 | 59.20 | 73.66 | 125.6 | |

The results shown in Table 1, specifically the % change in recrystallization, suggest that the carbon nanotubes act as nucleating agents in these crystalline polyester resins. The difference in the melting points of the neat crystalline polyester from the carbon nanotube/crystalline polyester samples shows a relative percentage increase in crystallinity of about 5%. The concentration of carbon nanotube loading in the sample crystalline polyester is really low and does not show a significant difference between 0.075% and 0.185%, but generally will show a significant increase in crystallinity at loadings over 0.3%. Moreover, the crystallinity can decrease again when the MWNT concentration is about or exceeds 10%, due to the MWNTs hindering the molecular movement in the polymer matrix in the molten state, which caused a reduction of the polymer crystallization rate, as reported by Yu et al.; Bhattacharyya et al.; Tzavalas et al.; Kumar; and Ryan et al. Also as previously reported in literature, in other polymers, such as isotactic polypropylene, the induction time for crystallization is reduced by the addition of carbon nanotube and typically Tₘ is shifted to higher temperatures in the presence of carbon nanotubes. This supports the conclusion that carbon nanotubes act as nucleating agents in these polymeric systems.

### The Effect of MWNTs on Resistivity and Conductivity

Each of the composites prepared in Examples 1-3 can be incorporated into toners according to suitable means known in the art. Table 2 depicts the resistivity values of carbon black toner containing crystalline polyester resins and various MWNT loadings. Even at very low carbon nanotube loadings, toner resistivity is greatly improved.

| | |
|---|---|
| **Table 2.** Resistivity of Carbon Black Toner Containing Crystalline Polyester Resins as a Function of MWNT Loading | |

| **MWNT (wt% of total toner weight)** | **Resistivity (Ohm cm) (Expected Values)** |
|---|---|
| 0% | 7.1 x 10¹² |
| 0.075% | 1.0 x 10¹³ |
| 0.185% | 5.0 x 10¹³ |
| 1.0% | 1.0 x 10¹⁴ |
| 1.5% | 1.0 x 10¹⁵ |
| 2.0% | 1.0 x 10¹⁶ |
| 3.0% | 1.0 x 10¹⁵ |
| 5.0% | 1.0 x 10¹³ |

For toner applications that require increased electrical conductivity, the addition of MWNTs into the polymer chain can improve the electrical conductivity of the toner. As reported by Yu et al., higher loadings of MWNTs, such as about 2 to about 20 weight % of the MWNT/polymer composite weight, are favorable to achieve the suitable conductivity that is resistive to change in temperature and it thus more thermally stable. Of course, amounts outside of this range may be employed.

It will be appreciated that various of the above-disclosed and other features and functions, or alternatives thereof, may be desirably combined into many other different systems or applications. Also, various presently unforeseen or unanticipated alternatives, modifications, variations or improvements therein may be subsequently made by those skilled in the art, and are also intended to be encompassed by the following claims.

## Claims

1. A toner comprising:
a polymer matrix comprising carbon nanotubes dispersed in a polymer;
optionally one or more colorants; and
optionally one or more waxes.

2. The toner according to claim 1, wherein the polymer is a polycarbonate, polyamide, polyester, polyurethane, polyethylene, polyolefin, latex polymer, or a mixture thereof.

3. The toner according to claim 1, wherein the polymer is crystalline polymer, semi-crystalline polymer, or amorphous polymer.

4. The toner according to claim 1, wherein the polymer matrix comprises carbon nanotubes from about 0.05% to about 20% by weight of the polymer matrix; preferably from about 1% to about 5% by weight of the polymer matrix.

5. The toner according to claim 1, wherein at least some of the polymer is covalently attached to the carbon nanotubes.

6. The toner according to claim 1, wherein the toner is an emulsion/aggregation toner.

7. The toner according to claim 1, wherein the polymer matrix is formed by a method comprising:
functionalizing carbon nanotubes;
covalently attaching a first monomer to the functionalized carbon nanotubes; and
polymerizing the first monomer with a second monomer to form a polymer matrix comprising carbon nanotubes.

8. The toner according to claim 1, wherein the toner has a resistivity of from about 1.0 x 10¹³ to about 1 x 10¹⁶ ohm·cm; preferably from about 1.0 x 10¹⁴ to about 1 x 10¹⁶ ohm·cm.

9. A method of making a toner, comprising:
functionalizing carbon nanotubes;
covalently attaching a first monomer to the functionalized carbon nanotubes;
polymerizing the first monomer with a second monomer to form a polymer matrix comprising carbon nanotubes; and
adding one or more colorants and/or one or more waxes to the polymer matrix to form a toner.

10. The method according to claim 9, wherein the first monomer is a diol having from 2 to 36 carbons, a polyamine, an aminocarboxylic acid, an amino alcohol, or a mixture thereof; preferably the first monomer is a diol selected from a group consisting of: 1,8-octanediol, 1,9-nonanediol, 1,10-decanediol, 1,11-undecanediol, 1,12-dodecanediol, or a mixture thereof.

11. The method according to claim 9, wherein the polymer matrix is a matrix of a polycarbonate, a polyamide, a polyester, a polyurethane, polyolefin, latex polymer, or a mixture thereof.

12. The method according to claim 9, wherein the second monomer is an organic acid.

13. An emulsion/aggregation toner comprising:
a crystalline polyester matrix comprising multi-walled carbon nanotubes dispersed in crystalline polyester;
optionally one or more colorants; and
optionally one or more waxes;
wherein at least some of the crystalline polyester is covalently linked to the carbon nanotubes.

14. The emulsion/aggregation toner according to claim 13, wherein the polymer matrix comprises carbon nanotubes from about 0.05% to about 20% by weight of the polymer matrix; preferably from about 1% to about 5% by weight of the polymer matrix.

15. The emulsion/aggregation toner according to claim 14, wherein the toner has a resistivity of from about 1.0 x 10¹³ to about 1 x 10¹⁶ ohm·cm, preferably from about 1.0 x 10¹⁴ to about 1 x 10¹⁶ ohm·cm.
